(19) Europäisches Patentamt
European Patent Office
Office européen des brevets

(11) **EP 4 738 107 A1**

(12) **EUROPEAN PATENT APPLICATION**

(43) Date of publication:
06.05.2026 Bulletin 2026/19

(21) Application number: 25156499.3

(22) Date of filing: 07.02.2025

(51) International Patent Classification (IPC):
*G06F 9/30* (2018.01) *G06F 15/78* (2006.01)

(52) Cooperative Patent Classification (CPC):
**G06F 15/7821; G06F 9/3004**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.10.2024 KR 20240150358

(71) Applicant: **University-Industry Foundation,
Yonsei
University
Seoul 03722 (KR)**

(72) Inventors:
• **KIM, Youngsok**
Seoul 03722 (KR)
• **LEE, Suhyun**
Seoul 03722 (KR)
• **LIM, Chaemin**
Seoul 03722 (KR)
• **CHOI, Jinwoo**
Seoul 03722 (KR)
• **KIM, Hanjun**
Seoul 03722 (KR)

(74) Representative: **Germain Maureau
12, rue Boileau
69006 Lyon (FR)**

(54) **SKEW RESISTANCE PROCESSING IN DIMM DEVICE AND PROCESSING METHOD**

(57) The present disclosure relates to a skew resistance PID device and a processing method, and the device includes: Dual In-line Memory Modules (DIMMs) composed of multiple ranks respectively having multiple banks, and In-DIMM Processors (IDPs) that process internal memory operations; a memory controller; and a host CPU connected to the memory module through the memory controller and configured to enhance parallel processing performance of the IDPs by replicating a join key in units of bank sets and rank sets.

## Description

This application claims under 35 U.S.C. §119(a) the benefit of Korean Patent Application No. 10-2024-0150358 filed on October 30, 2024, the entire contents of which is incorporated herein by reference.

[TECHNICAL FIELD]

The present disclosure relates to a PID technology, and more specifically, to a skew resistance PID device and processing method for enhancing parallel processing performance of In-DIMM Processor (IDPs) by replicating a join key on the basis of bank and rank units through a memory controller.

[BACKGROUND]

Recent advances in dual in-line memory modules (DIMMs) have enabled DIMMs to support Processing-In-DIMM (PID) by placing the In-DIMM Processors (IDP) closer to the memory banks. PID may accelerate applications suffering from memory wall problems by offloading the memory intensive tasks to IDP. Offloading work to the IDP allows applications to take advantage of the DIMM's high internal memory bandwidth, minimizing data movement between the host central processing unit (CPU) and the DIMM. Although commercial DIMMs supporting PID were not available until recently, the introduction of UPMEM DIMMs and Samsung AxDIMMs has led to growing interest in PID across a range of fields including bioinformatics, machine learning, and security.

In-memory databases often suffer from the memory wall problem, which has been shown to be greatly improved with PID. In particular, previous studies have proposed a PID join algorithm to accelerate in-memory join operations. A join operation involves two tables, R and S. The CPU evenly distributes the tuples of R and S to each IDP, then allows each IDP to perform global partitioning independently. The CPU then reshuffles the tuples between IDPs, allowing each IDP to process its own partition, with each IDP performing a local join operation. The CPU then collects the output tuples from all IDPs and performs a fast in-memory join operation.

However, the existing PID join algorithm suffers from poor performance and scalability when the input table is skewed. These algorithms use global partitioning per IDP to evenly distribute the computational load, but skewed input tables cause severe load imbalances, leading some IDPs to process while others remain idle.

(Prior Art Literature)

(Patent Document)

Korean Patent Application Publication No. 2022-0062399 (May 16, 2022)

[SUMMARY]

In view of the above, the present disclosure provides a skew resistance Processing in DIMM (PID) device and processing method which enables enhancing parallel processing performance of In-DIMM Processors (IDPs) by replicating a join key in units of bank sets and rank sets.

The present disclosure also provides a skew resistance PID device and processing method which enables determining a cost model for determining a replication ratio based on a configuration of the PID device.

The present disclosure also provides a skew resistance PID device and processing method which enables determining a bank set count and a rank set count by calculating an optimal join key replication ratio *RRoptimal* through a cost model.

In one aspect, there is provided a skew-resistant PID device, including: Dual In-line Memory Modules (DIMMs) composed of multiple ranks respectively having multiple banks, and In-DIMM Processors (IDPs) that process internal memory operations; a memory controller; and a host CPU connected to the memory module through the memory controller and configured to enhance parallel processing performance of the IDPs by replicating a join key in units of bank sets and rank sets.

The host CPU may analyze a configuration of R and S tables and determines a cost model for determining a replication ratio based on a configuration of the PID device.

The host CPU may determine a bank set count and a rank set count by calculating an optimal join key replication ratio through the cost model.

The host CPU may perform a Host-to-DIMM Scatter operation to distribute the R and S tables to the DIMM.

The IDPs may perform a Bank and Rank Set-aware Partitioning operation to replicate the R table to bank sets and rank sets and distribute the S table to the bank sets and the rank sets based on the replication of the R table.

The host CPU may perform an All-to-All Inter-IDP Shuffle operation to transmit data of the R and S tables to each of the IDPs so that each of the IDPs exchanges and processes data of the R and S tables.

Each of the IDPs may perform a Single-IDP Join operation to generate a join result by performing a join operation based on data of the R and S tables.

Each of the IDPs may perform hash join or sort-merge join as the join operation.

The IDPs may transmit corresponding join results to the host CPU so that the host CPU collects the join results to generate a final result.

In another aspect, there is provided skew resistance Processing in DIMM (PID) processing method, performed by a skew resistance PID device which includes: Dual In-line Memory Modules (DIMMs) composed of multiple ranks respectively including multiple banks, and In-DIMM Processors (IDPs) that process internal memory operations; a memory controller; and a host CPU connected to the memory module through the memory controller and configured to enhance parallel processing performance of the IDPs by replicating a join key in units of bank sets and rank sets, and the method include: determining a replication ratio based on a configuration of the PID device; and enhancing parallel processing performance of the IDPs by replicating a join key in units of bank sets and rank sets based on the determined replication ratio.

The disclosed technology may have the following effects. However, it should not be interpreted as limiting the scope of the disclosed technology, as this does not imply that a specific embodiment must include all or only the effects described below.

In the skew resistance PID device and processing method according to one embodiment of the present disclosure, it is possible to enhance parallel processing performance of In-DIMM Processors (IDPs) by replicating a join key in units of bank sets and rank sets.

In the skew resistance PID device and processing method according to one embodiment of the present disclosure, it is possible to determine a cost model for determining a replication ratio based on a configuration of the PID device.

In the skew resistance PID device and processing method according to one embodiment of the present disclosure, it is possible to determine a bank set count and a rank set count by calculating an optimal join key replication ratio *RRoptimal* through a cost model.

[BRIEF DESCRIPTION OF THE DRAWINGS]

FIG. 1 is a drawing illustrating the characteristics of a conventional PID join algorithm and SPID-Join.
FIG. 2 is a drawing illustrating the functional configuration of a skew resistance PID device according to one embodiment of the present disclosure.
FIG. 3 is a drawing showing a PID join algorithm according to one embodiment of the present disclosure.
FIG. 4 is a drawing illustrating an example of a working model according to one embodiment of the skew resistance PID device of FIG. 2.
FIG. 5 is a flowchart explaining a skew resistance PID processing method according to the present disclosure.
FIG. 6 is a drawing showing a bank set-based join key replication process of the SPID-Join algorithm.
FIG. 7 is a drawing showing a rank set-based join key replication process of the SPID-Join algorithm.
FIG. 8 is a drawing showing the bank and rank set partitioning of SPID-Join for IDPs and input tuples.
FIG. 9 is a drawing showing the variables for constructing a cost model according to one embodiment of the present disclosure.
FIG. 10 is a diagram showing a join operation latency of SPID-Join according to one embodiment of the present disclosure.

[DETAILED DESCRIPTION]

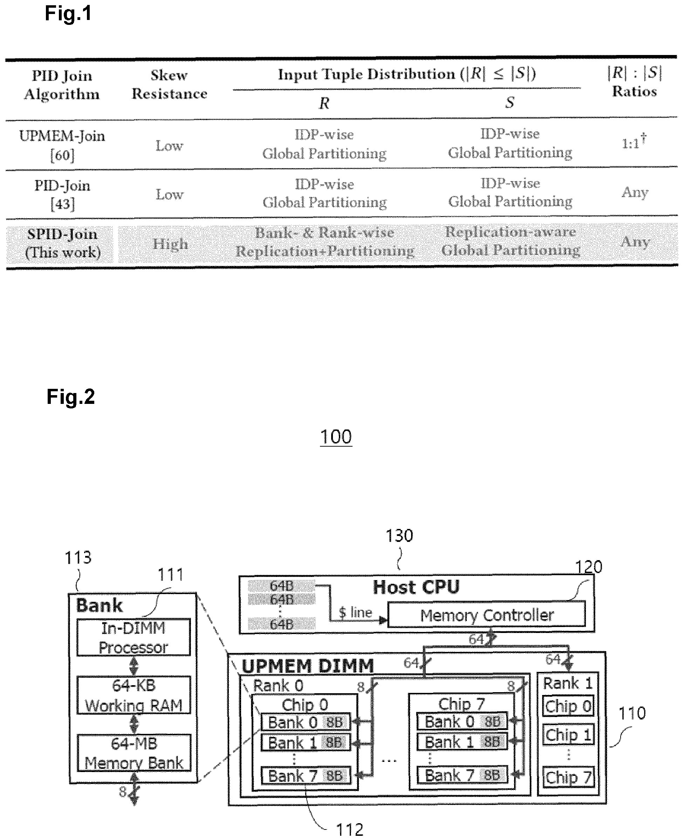

FIG. 1 is a drawing illustrating the characteristics of a conventional PID join algorithm and SPID-Join.

Referring to FIG. 1, the key characteristics of three Processing-in-DIMM (PID) join algorithms may be compared.

UPMEM-Join and PID-Join correspond to conventional PID join algorithms, and may perform joins through IDP-wise Global Partitioning. Here, IDP-wise Global Partitioning refers to a method where a processor built into a DIMM 110 distributes and processes data. For example, due to IDP-wise Global Partitioning, the tuples (rows) of input tables R and S may be evenly distributed to each IDP 111. IDP-wise Global Partitioning may cause a load imbalance when a specific join key is biased and concentrated on a single IDP 111, resulting in excessive load on that IDP. Even when other IDPs 111 have completed their work, the IDP with the highest load may cause delays as its work is not finished.

On the other hand, SPID-Join may perform Replication-aware Global Partitioning using Bank Set- & Rank Set-wise Replication + Partitioning. Here, Bank Set- & Rank Set-wise Replication + Partitioning refers to a method that utilizes the parallelism of banks 113 and ranks 112 within a memory, while Replication-aware Global Partitioning refers to a technique that introduces data replication to solve the load imbalance problem of existing IDP-wise Global Partitioning. That is, since SPID-Join can distribute the load to multiple IDPs through replication if the join key is biased, it is possible to effectively solve load imbalance.

In addition, both UPMEM-Join and PID-Join may distribute data to all IDPs 111 in an equal ratio by partitioning the R table and S table using the IDP-wise Global Partitioning method. However, load imbalance may occur in the case of biased input data. On the other hand, SPID-Join uses the Bank Set- & Rank Set-wise Replication + Partitioning method to enable more fine-grained data partitioning and load distribution through replication. When comparing the R and S table size ratios of UPMEM-Join, PID-Join, and SPID-Join, UPMEM-Join is optimized for a 1:1 ratio, while PID-Join and SPID-Join have no restrictions on the R:S ratio and may operate flexibly at various ratios.

FIG. 2 is a drawing illustrating a skew resistance PID device according to one embodiment of the present disclosure.

Referring to FIG. 2, the skew resistance PID device 100 may include a DIMM 110, IDPs 111, ranks 112, banks 113, a memory controller 120, and a host CPU 130.

The DIMM 110 may be composed of multiple ranks 112 respectively including multiple banks 113, and may include the IDPs 111 that processes internal memory operations. Here, the DIMM 110 may refer to a module that stores and transmits memory data in a computer system implementing a host memory. The DIMM 110 may include multiple banks 113 to provide a high memory bandwidth and capacity. Additionally, the DIMM 110 has a hierarchical structure composed of the banks 113 and the ranks 112. Each rank 112 may be composed of multiple banks 113. The DIMM 110 may distribute consecutive bytes of a burst to the multiple banks 113 using a byte-interleaving technique. For example, in the case of Double Data Rate 4 (DDR4) DIMM set to 64-bit bursts, 8 bytes of a burst may be distributed and processed across the multiple memory banks. Here, a burst may refer to a minimum data access unit supported by the DIMM 110.

In one embodiment, the DIMM 110 may provide bank-level parallelism and rank-level parallelism. Here, when processing a memory request through bank-level parallelism, the DIMM 110 may process the memory request by accessing the multiple banks 113 in parallel. In addition, the DIMM 110 may provide parallelism between ranks in a manner that independently operates the multiple ranks 112 through dedicated control signals for the respective ranks 112, enabling parallel processing of different memory requests.

The memory controller 120 may manage and coordinate data transfer between the host CPU 130 and the DIMM 110. For example, the memory controller 120 may manage a task of reading or writing data from the DIMM 110 at the request of the host CPU 130. Additionally, when the host CPU 130 accesses the DIMM 110, the memory controller 120 may deliver a request generated from the host CPU 130 to a correct memory location by converting a logical memory address into a physical memory address. The memory controller 120 may perform memory bandwidth management to coordinate data transmission between multiple memory channels and the multiple banks 113. However, aspects of the present disclosure is not limited thereto, and when transmitting data in burst mode from the DIMM 110, the memory controller 120 may distribute or aggregate the data into the multiple banks 113.

The host CPU 130 may be connected to a memory module through the memory controller 120 and may enhance the parallel processing performance of the IDPs 111 by replicating a join key in units of bank 113 sets and rank 112 sets. Here, the join key may refer to a key value used in a database join operation and may be used, for example, to perform a join between two database tables based on a common attribute value between the database tables. The host CPU 130 may perform parallel processing for the IDPs 111, by replicating the join keys in units of bank 113 sets and rank 112 sets and performing data matching between tables based on the replicated join key.

In one embodiment, the host CPU 130 may analyze the configuration of R and S tables and determine a cost model that determines the replication ratio based on the configuration of the PID device 100. Here, the R and S tables may be the input tables used in a join operation in a database and distributed computing. The R table may serve as a first input table in a join operation, while the S table may serve as a second input table. The host CPU 130 may analyze the sizes of the R and S tables and the distribution of join keys included in each table, and determine the replication ratio of each join key based on the result analysis result. For example, the host CPU 130 may determine the join key replication ratio of the R and S tables based on a time required for the join operation, a memory bandwidth usage, and a degree of data imbalance based on a cost model.

In one embodiment, the host CPU 130 may determine a bank 113 set count and a rank 112 set count by calculating an optimal join key replication ratio ($RR_{optimal}$) through the cost model. Here, the optimal join key replication ratio may correspond to a ratio representing how much a join key should be replicated across the multiple IDPs 111 to address the data skew problem. The host CPU 130 may determine the bank 113 set count and the rank 112 set count in the PID device 100 for distributing data, to be processed by the IDPs 111, based on the optimal join key replication ratio according to a cost model. For example, the host CPU 130 may analyze the size and distribution of the R and S tables, determine the optimal join key replication ratio according to a memory cost, a processing cost, and a communication cost, and perform data distribution according to the join key replication ratio.

In one embodiment, the host CPU 130 may perform a Host-to-DIMM Scatter operation to distribute the R and S tables to the DIMM 110. Here, the Host-to-DIMM Scatter operation may correspond to an operation that efficiently allocates data by distributing the data to multiple memory banks 113 and ranks 112 in a process in which the R table and S table data is transmitted from the host CPU 130 to the DIMM 110. The host CPU 130 may transmit the data of the R and S tables by distributing the data to the multiple banks 113 and ranks 112 through a Host-to-DIMM Scatter operation. For example, the host CPU 130 may perform parallel processing by distributing data for a specific join key based on the bank 113 set count and rank 112 set count of a specific IDP 111 based on a Host-to-DIMM Scatter operation.

In one embodiment, the IDPs 111 may perform a Bank and Rank Set-aware Partitioning operation to replicate the R table to the bank 113 sets and the rank 112 sets and distribute the S table to the bank 113 sets and the rank 112 sets based on the replication of the R table. Here, the Bank and Rank Set-aware Partitioning operation may correspond to an operation in which the IDPs 111 appropriately replicate and divide the data of the R and S tables according to the bank 113 sets and rank 112 sets and stores the replicated data in the DIMM 110, so that the IDPs 111 can process the data in parallel. Each IDP 111 may replicate the R table according to the bank 113 sets and rank 112 sets and distribute the S table to the bank 113 sets and rank 112 sets based on the replicated R table.

In one embodiment, the host CPU 130 may perform an All-to-All Inter-IDP Shuffle operation to transmit data of the R and S tables to each IDP 111, so that each IDP 111 can exchange and process data from the R and S tables. Here, the All-to-All Inter-IDP Shuffle operation may refer to a process of re-ordering and exchanging data so that data matching the join key is properly distributed before each IDP 111 independently performs a join operation. The host CPU 130 may exchange the R table and S table data with each IDP through the All-to-All Shuffle operation, enabling each IDP 111 to perform the join operation independently. In doing so, the host CPU 130 may evenly distribute data among the IDPs to prevent data from being concentrated in a specific IDP 111.

In one embodiment, each IDP 111 may perform a Single-IDP Join operation, which is a join operation based on data from the R table and S table to generate a join result. Here, the Single-IDP Join operation may refer to an operation that performs a join operation using only the data allocated to each IDP 111, without additional data exchange with other external processors. The operation is performed after the All-to-All Inter-IDP Shuffle operation. Each IDP 111 may perform a join operation based on the data of the R table and S table received from the host CPU 130 to combine the R table and S table and generate a join result.

In one embodiment, for the join operation, each IDP 111 may perform hash join or sort-merge join. Here, the hash join may be a method of combining data between tables by converting the join key into a hash key. Additionally, the sort-merge join may correspond to a join method used when the two tables are pre-sorted by join key. For example, according to the sort-merge join, the data of the R table and S table may be sorted, and the data is merged based on the same join key. Each IDP 111 may generate a hash table by performing hash join, convert the join key into a hash key, and store the hash key in a hash slot. Additionally, each IDP 111 may perform sort-merge join on the sorted R table and S table to merge the data if the join keys of the respective tables match.

In one embodiment, each IDP 111 may transmit a corresponding join result to the host CPU 130 so that the host CPU 130 can collect join results to generate a final result. Here, each IDP 111 may transmit, to the host CPU 130, a join result generated by performing a join operation on the R table and S table. Thereafter, the host CPU 130 may merge the distributed results based on a processing range of each IDP 111 to generate a final join result. For example, the host CPU 130 may collect join results received from the IDPs 111 and merge duplicate join keys or data corresponding to the same ID to generate a final join table.

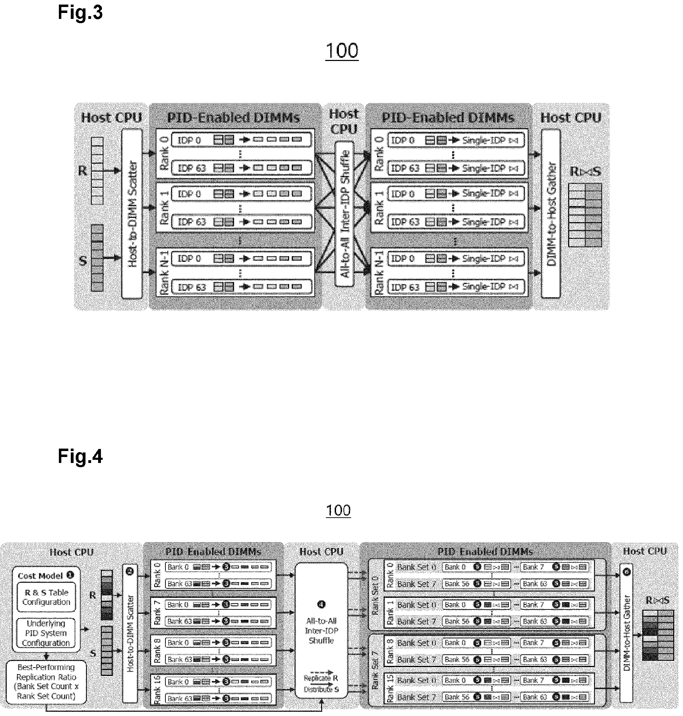

FIG. 3 is a drawing showing a PID join algorithm according to one embodiment of the present disclosure.

Referring to FIG. 3, the process of PID-Join, a PID join algorithm, performing an R $\bowtie$ S join on two input tables R and S stored in host memory may be explained. Here, $|R| \leq |S|$ is assumed.

First, the host CPU 130 may evenly distribute and transfer the tuples of R and S from a host memory to the all IDPs 111. Here, a tuple may correspond to a data unit representing a row or record in a relational database. Second, each IDP 111 may perform IDP-wise Global Partitioning on the R and S tuples assigned thereto. Third, the host CPU 130 may cause every IDP 111 to transfer tuples assigned thereto to an IDP 111 suitable for IDP-wise Global Partitioning. Fourth, each IDP 111 may perform a Single-IDP Join operation for the R and S partitions assigned thereto and generate a join result for the partition. For example, each IDP 111 may perform hash join to further partition given R and S partitions to fit within the WRAM size, and then use 24 hardware threads to build a WRAM-fit hash table and process the partitions in parallel. Finally, the host CPU 130 may collect join results respectively generated by all the IDPs 111 and finally complete the join operation.

FIG. 4 is a drawing illustrating an example of a SPID-Join algorithm according to one embodiment of the present disclosure.

Referring to FIG. 4, the SPID-Join algorithm may support various join key replication ratios by utilizing the parallelism of the banks 113 and ranks 112 of the DIMM 110. The SPID-Join algorithm may group IDPs 111 of a PID-enabled DIMM 110 into a rank set 112 and a bank sets 113 and replicates R across the sets to evenly distribute the tuples of *S*. Here, at least one IDP 111 may form at least one bank 113 set, and a rank 112 set may be composed of at least one rank 112. Thereafter, the SPID-Join algorithm may partition the tuples of each set of bank 113 and rank 112 into the IDPs 111, shuffle the tuples between the IDPs 111, and then cause each IDP 111 to perform a Single-IDP Join operation on tuple partition thereof.

Here, by replicating the *R* table, the count of IDPs 111 allocated to each *R* tuple may be increased, thereby increasing the internal memory bandwidth and computational throughput. By evenly distributing the tuples of the *S* table across each bank 113 set and each rank 112 set, the load imbalance between the IDPs 111 caused by the skew of S may be reduced. Here, since each set receives one *R* table replica, the total set count may be the join key replication ratio of SPID-Join. This allows SPID-Join to adjust the bank 113 set count and rank 112 set count to match a given join key replication ratio by configuring the total set count for banks 113 and ranks 112. For example, if eight UPMEM DIMMs 110 collectively provide 16 ranks 112 and 64 banks 113 per rank, SPID-Join may support join key replication ratios from 1 to 1,024.

The SPID-Join algorithm may first use a cost model to identify an optimal join key replication ratio. Next, the SPID-Join algorithm may determine the rank 112 set count and the bank 113 set count according to a selected join key replication ratio. Afterwards, the SPID-Join algorithm performs a Host-to-DIMM Scatter operation that evenly distributes tuples from the host CPU 130 to the DIMM 110, so that all tuples of the *R* table and the *S* table can be evenly distributed to the all the IDPs 111. Thereafter, each IDP 111 performs Bank and Rank Set-aware Partitioning operation on the tuples of the *R* table and *S* table based on the rank 112 set count and the bank 113 set count to evenly distribute S partitions across the rank 112 sets and bank 113 sets and replicate R partitions identically across the entire rank 112 sets and bank 113 sets. After that, the SPID-Join algorithm may perform an All-to-All Inter-IDP Shuffle operation to transfer the tuples of the R table and S table from a source IDP 111 to a destination IDP 111. The IDPs 111 may perform a Single-IDP Join operation on the R table and S table partitions. Finally, the host CPU 130 may receive join results from the DIMM 110 to the host CPU 130.

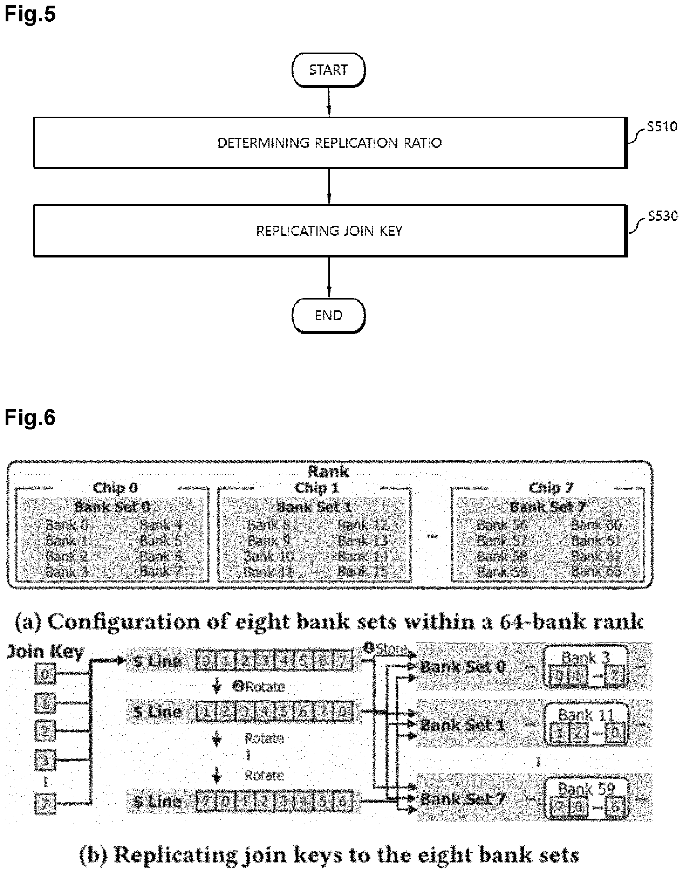

FIG. 5 is a flowchart explaining a skew resistance PID processing method according to the present disclosure.

Referring to FIG. 5, the skew resistance PID device 100 may determine a replication ratio based on the configuration of the PID device (step S510). Here, the skew resistance PID device 100 may calculate an optimal join key replication ratio *RRoptimal* through a cost model to determine the bank 113 set count and the rank 112 set count. In addition, the skew resistance PID device 100 may analyze the size and distribution of the R and S tables, determine an optimal join key replication ratio according to a memory cost, a processing cost, and a communication cost, and perform data distribution according to the join key replication ratio.

The skew resistance PID device 100 may increase the parallel processing performance of the IDPs 111 by replicating the join key in units of bank 113 sets and rank 112 sets of the DIMM 110 based on the replication ratio (step S530). Here, the skew resistance PID device 100 may increase the parallel processing performance of the IDP 111 by replicating the join key in units of bank 113 sets and rank 112 sets by performing a Host-to-DIMM Scatter operation, a Bank and Rank Set-aware Partitioning operation, an All-to-All Inter-IDP Shuffle operation, and a Single-IDP Join operation

FIG. 6 is a drawing showing a bank set-based join key replication process of the SPID-Join algorithm.

Referring to FIG. 6, the SPID-Join algorithm first causes the host CPU 130 to issue a single burst-length memory request to load eight join keys from eight memory bank 113 sets into a 64-byte vector register of the host CPU 130. The SPID-Join algorithm then performs eight iterations of join key replication and vector register rotations to replicate the join keys across all eight bank 113 sets. In each iteration, the eight join keys stored in the vector register are distributed to the eight memory banks, belonging to different bank sets, using a burst-length. Since each bank set should retrieve all eight join keys according to byte interleaving, the SPID-Join algorithm rotates the vector register by 8 bytes (i.e., the size of a tuple containing the 4-byte join key and the 4-byte tuple index) and then moves on to the next iteration.

In the next iteration, the SPID-Join algorithm again uses a burst-length memory request to distribute the join keys, and each bank set retrieves the join key which appears next in the set of the eight join keys stored in the vector register. When all the iterations are performed, a replica of all the eight join keys are placed to each of the eight bank 113 sets, completing the replication of the eight join keys to the eight bank 113 sets. This allows SPID-Join algorithm to complete the join key replication using only nine burst-length memory requests and seven vector register rotations. The SPID-Join algorithm may replicate a larger number of join keys to a larger number of bank 113 sets by increasing the iteration count and adjusting the target banks 113.

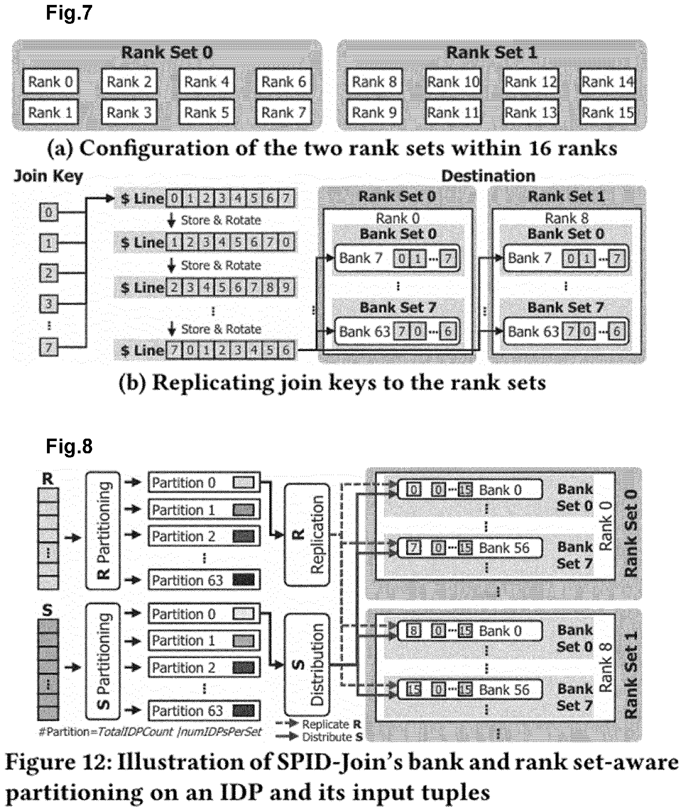

FIG. 7 is a drawing showing a rank set-based join key replication process of the SPID-Join algorithm.

Referring to FIG. 7, it is shown how the SPID-Join algorithm accelerates join key replication in a rank 112 set configuration with two rank 112 sets and eight ranks 112 per rank 112 set. Similar to the join key replication between bank 113 sets, SPID-Join may first load join keys into a vector register. Then, the SPID-Join algorithm may distribute the join keys to two sets of ranks 112 in parallel. Here, one host CPU 130 thread distributes the join keys to the bank sets of one rank set 112, and another host CPU 130 thread does the same to the bank sets of the other rank set 112.

Thereafter, the host CPUs 130 may repeatedly perform an operation of rotating the vector register by one join key and concurrently distributing the join keys to the bank 113 sets of the two rank sets 112. In this way, the SPID-Join algorithm may increase the join key replication bandwidth by up to the rank 112 set count. When the rank 112 set count is set to the number of PID-supported rank 112 sets, the SPID-Join algorithm may fully utilize the total memory bandwidth provided by all the memory channels of the PID device 100.

FIG. 8 is a drawing showing the bank and rank set partitioning of SPID-Join for IDPs and input tuples.

Referring to FIG. 8, it shows how an IDP 111 performs a Bank and Rank Set-aware Partitioning operation on tuples of the *R* table and *S* table with eight sets of banks 113 and two sets of ranks 112. First, IDP 111 may perform Radix partitioning to divide the *R* table and *S* table into *numIDPsPerSet* number of partitions. Here, may be set to a value obtained by dividing the number of all IDPs 111 available in the PID device 100 by the bank 113 set cunt and the rank 112 set count. For example, in a PID device 100 with 1,024 IDPs 111, *numIDPsPerSet* may be set to 64 (= 1024/(2×8)). Here, *rankSetCount* = 2 and *bankSetCount* = 8.

Next, IDP 111 performs replication of the *R* table and distribution of the *S.* table. Here, in the replication of the *R* table, the tuples of each partition may be replicated to the corresponding (*bankSetCount* × *rankSetCount*) IDP-wise partitioning, and in the distribution of the *S.* table, the tuples of each *S* partition are distributed to the IDP-wise partitioning. The IDPs 111 involved in the IDP-wise partitioning may belong to different bank 113 sets and rank 112 sets. When IDP 111 processes *numIDPsPerSet* number of partitions of both *R* and *S,* the Bank and Rank Set-aware Partitioning operation is completed, and the next step of the join operation (i.e., inter-IDP shuffle) may be performed to transfer the tuples stored in the IDP-wise partition to the corresponding destination IDP 111.

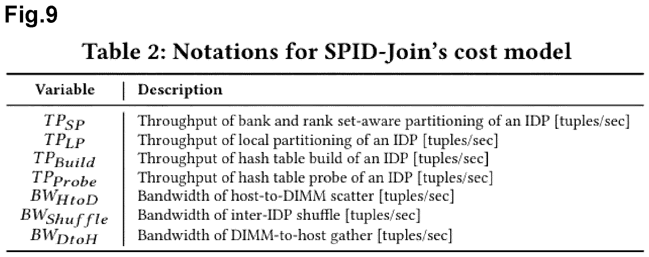

FIG. 9 is a drawing showing the variables for constructing a cost model according to one embodiment of the present disclosure.

Referring to FIG. 9, a cost model may be built based on the variables $\mathbb{P}$ , $Latency_{SPID\text{-}Join}$ and $Capacity_{SPID\text{-}Join}$. Here, $\mathbb{P}$ may correspond to a set of join key replication ratios that can be supported by the SPID-Join algorithm depending on the configuration of the PID device 100. In addition, $Latency_{SPID\text{-}Join}$ may correspond to a cost evaluation function that predicts a join execution latency of the SPID-Join algorithm, and $Capacity_{SPID\text{-}Join}$ may correspond to a function that calculates a memory capacity required by the SPID-Join algorithm. The cost model may find the element *rr* where $Latency_{SPID\text{-}Join}(rr)$ becomes minimum and $Capacity_{SPID\text{-}Join}(rr)$ does not exceed a memory bank size, and may determine *rr* as an optimal replication ratio of the SPID-Join algorithm. $\mathbb{P}$ which is a set of join key replication ratios, may be defined using the combinations of available rank 112 sets $\mathbb{R}$ and bank 113 sets $\mathbb{B}$ . The cost model may consider the ranks 112 set count as a power of 2, and the SPID-Join algorithm may group banks 113 by utilizing the burst length within each rank 112. Thus, $\mathbb{R}$ and $\mathbb{B}$ may be defined as follows:

[Equation 1]

$$\mathbb{R} = \{x | x = 2^k, 0 \le k \le \log_2 \# Rank\}$$
$$\mathbb{B} = \{1, 8 (= 1 * numBanksPerBL), 16, 32, 64\}$$

Here, *numBanksPerBL* may correspond to eight banks processing one burst in UPMEM DIMM 110.

Then, $\mathbb{P}$ is defined as a combination of $\mathbb{R}$ and $\mathbb{B}$ and may be defined as follows:

[Equation 2]

$$\mathbb{P} = \{x | x = ab, a \in \mathbb{R}, b \in \mathbb{B}, \ Capacity_{SPID-Join}(x) < Capacity_{MemoryBank}\}$$

To find the lowest join execution latency, the SPID-Join algorithm's join execution latency (i.e., *LatencySPID-Join*) may be modeled as the sum of the latencies of the five join execution steps. The five steps may be further grouped into two. Here, the SPID-Join algorithm may obtain the following Equation 3 when using hash join with a Single-IDP Join operation.

$Latency_{SPID\text{-}Join} = Latency_{PID} + Latency_{Comm}$ $Latency_{PID} = Latency_{SP} + Latency_{LP} + Latency_{Build} + Latency_{Probe}$ $Latency_{Comm} = Latency_{HtoD} + Latency_{Shuffle} + Latency_{DtoH}$ [Equation 3]

Here, *SP* refers to the Bank and Rank Set-aware Partitioning operation; *LP*, *Build*, and *Probe* correspond to the three internal steps of a single- IDP hash join operation (i.e., local partitioning, hash table build, hash table probe); *H to D* denotes a Host-to-DIMM Scatter operation, *Shuffle* denotes an All-to-All Inter-IDP Shuffle operation, and *D to H* denotes the DIMM-to-host gather from the DIMM 110 to the host CPU 130.

To model the latencies of the five steps and the required memory capacity within a single bank (i.e., $Capacity_{SPID\text{-}Join}$), the cost model needs to calculate the total $R$ and $S$, tuple count, being involved in each of the steps, and the tuple count per IDP 111. As the SPID-Join algorithm's join key replication increases the R tuple count by replicating the R tuples, the per-IDP R tuple counts, which is per IDP 111, and the total R tuple counts may be calculated as follows:

[Equation 4]

$$R_{IDP} = |R| \times rr \ / \ \#IDPs, \quad R_{Total} = R_{IDP} \times \#IDPs$$

Here, *#IDPs* denotes the total number of IDPs available on a system where PID can be supported. The tuples of $S$, on the other hand, may be distributed to the bank and rank sets. Since all IDPs 111 should wait for the heaviest-load IDP 111 to complete execution at each join execution step, the cost model may be modeled based on the fact that a heaviest-load IDP has a dominant impact on the execution latency of each step, rather than precisely calculating the total and the per-IDP sizes of the $S$, tuples . Accordingly, the per-IDP and the total S tuples counts may be modeled as Equation 5.

[Equation 5]

$$S_{IDP} = Heaviest\text{-}Load \ / \ rr, \quad S_{Total} = S_{IDP} \times \#IDPs$$

Here, *Heaviest-Load* may refer to the $S$, tuple count of the heaviest-load IDP 111 which is assigned a largest number of S tuples by the SPID-Join algorithm according to the bank 113 and rank 112 set configuration. Then, to determine the memory required by the SPID-Join algorithm, **$Capacity_{SPID\text{-}Join}$** may be modeled as the sum of $R$ and $S$, tuples of the heaviest-load IDP 111, and $\alpha$ which is the size of the intermediate data. For hash join, $\alpha$ may be set to the size of the hash table, twice the size of $R$, setting a fill rate of 50%. For sort-merge join, $\alpha$ may be equivalent to the sizes of $R$ and $S$, to store the sorted data. **$Capacity_{SPID\text{-}Join}$** may be expressed as Equation 6.

[Equation 6]

$$Capacity_{SPID-Join} = R_{IDP} + S_{IDP} + \alpha$$

A key insight is obtained, that, for modeling the S tuple count of the heaviest-load IDP 111, the SPID-Join algorithm's distribution of $S$, tuples distributes the loads of not only the most popular join key, but also all the other join keys. This makes the most popular join key of $S$, still remain the most popular even after distributing the $S$, tuples to the IDPs 111. Based on the key insight, it is assumed that all the join keys, except the most popular join key, have negligible impact on the load of the heaviest-load IDP 111regardless of the replication ratio. Thus, the cost model may calculate the $S$, tuple count of the heaviest-load IDP 111 as follows:

[Equation 7]

$$Heaviest\text{-}Load = MostPopularJoinKeyCount + \frac{|S| - MostPopularJoinKeyCount}{\#IDPs}$$

Here, *MostPopularJoinKeyCount* denotes the number of the $S$, tuples which have the most popular join key.

In addition, *MostPopularJoinKeyCount* may be determined by a method for constructing a global histogram and by using an analytical model with statistics of an input table. If the input tables does not have preliminary statistics, the SPID-Join algorithm may allow the IDPs 111 to build a local histogram for $S$. The host CPUs 130 may then collect the local histograms to construct the global histogram and identify the most frequent join key. Since this process is performed concurrently with the Bank and Rank Set-aware Partitioning operation, the overhead may be minimized. The SPID-Join algorithm ensures an even distribution of S across, and the optimal replication ratio may be determined after the distribution of S. In addition, if the statistics of $S$, are available, *MostPopularJoinKeyCount* may be analytically calculated.

For example, if $S$, follows a Zipfian distribution and has a *Zipf* factor of *Zipf*, *MostPopularJoinKeyCount* may be calculated as follows:

[Equation 8]

$$MostPopularJoinKeyCount = |S| \times \frac{\frac{1}{1^{Zipf}}}{\sum_{k=1}^{|R|}(\frac{1}{k^{Zipf}})} = \frac{|S|}{\sum_{k=1}^{|R|}(\frac{1}{k^{Zipf}})}$$

The Zipf factor may characterize the probability of the n-th popular value and may be calculated as

$$\frac{1}{n^{Zipf}} / \sum_{k=1}^{N}(\frac{1}{k^{Zipf}})$$ . Here, multiplying $|S|$ with the probability of the most popular join key (i.e., n = 1) may derive the number of the S tuples having the most popular join key.

Using the aforementioned equations, the cost model may now estimate all the per-step execution latencies of a join execution. As the first two steps, the host-to-DIMM Scatter operation and the Bank and Rank Set-aware Partitioning operation are not affected by the SPID-Join algorithm's join key replication ratio, so latencies for these operations may be modeled as Equation 9.

[Equation 9]

$$Latency_{HtoD} = (|R| + |S|) / BW_{HtoD}$$
$$Latency_{SP} = (|R| + |S|) / TP_{SP}$$

All the remaining steps occur after the Bank and Rank Set-aware Partitioning operation, so the bank 113 set count and rank 112 set count of the SPID-Join algorithm need to be taken into account. Based on Equation 9, the remaining steps of the join execution may be modeled as Equation 10.

[Equation 10]

$$Latency_{Shuffle} = (R_{Total} + S_{Total}) / BW_{Shuffle}$$
$$Latency_{LP} = (R_{IDP} + S_{IDP}) / TP_{LP}$$
$$Latency_{Build} = R_{IDP} / TP_{Build}$$
$$Latency_{Probe} = S_{IDP} / TP_{Probe}$$
$$Latency_{DtoH} = S_{Total} / BW_{DtoH}$$

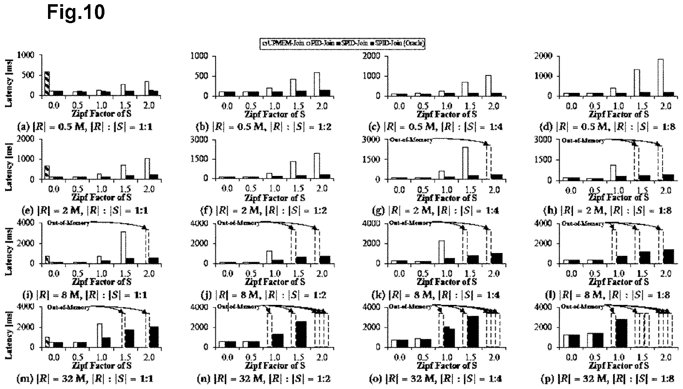

FIG. 10 is a diagram showing a join operation latency of SPID-Join according to one embodiment of the present disclosure.

Referring to FIG. 10, the join execution latency of SPID-Join may be compared with that of PID-Join. Here, an experiment to compare the join execution latency between algorithms is conducted. The experiment is conducted as follows.

1.1 Experimental Setup

An experiment is set up to compare the performance of SPID-Join with PID-Join and UPMEM-Join. The data used are synthetic datasets and TPC-H datasets, the table sizes vary from 0.5M to 32M, and the table ratios are set from 1:1 to 1:8. The Zipf distribution is used to model the non-normal distribution of data, with the Zipf factor set from 0.0 (uniform distribution) to 2.0 (skewed distribution). The PID join algorithm is compiled with g++-11 and compared in various environments.

1.2 Fast Join Executions with Skewed Tables

SPID-Join shows significantly better performance than PID-Join when data distribution is abnormal. When the Zipf factor is 1.0, 1.5, and 2.0, SPID-Join achieves up to 10.38× faster latency over PID-Join. In particular, when data is skewed, PID-Join suffers from poor performance because the load is not evenly distributed between IDPs, but SPID-Join solves this issue through dynamic load balancing. Additionally, PID-Join shows poor performance due to out-of-memory issues, while SPID-Join shows relatively less out-of-memory issues.

1.3 Scalability Analysis

Even on a uniform dataset with a Zipf factor of 0.0, SPID-Join outperforms PID-Join. In uniform distribution, the performance gap with PID-Join is reduced, but SPID-Join is still up to 3.07 times faster than PID-Join. This indicates that SPID-Join may perform efficient joins regardless of data distribution. While PID-Join experiences out-of-memory issues in this case as well, SPID-Join shows relatively less out-of-memory issues.

1.4 Mitigation of Inter-IDP Load Imbalance

To evaluate the efficiency of SPID-Join, the tuple distributions between the IDPs111 of PID-Join and SPID-Join are compared by varying the Zipf factor of S from 0.0 to 2.0 using 0.5M tuples and a 1:8 ratio. As a result, SPID-Join successfully alleviates the load imbalance among the IDPs 111 in all Zipf factors, and when the Zipf factor is 2.0, the standard deviation of the tuple distribution of PID-Join is 78,974 while the standard deviation of the tuple distribution of SPID-Join is 6,223. In addition, as a result of measuring the join execution latency, SPID-Join records a significantly lower latency of 165ms compared to PID-Join's 1,909ms, and SPID-Join also exhibits much less idled times for the ranks 112 and IDPs 111. These results show that join key replication of SPID-Join based on bank 113 sets and rank 112 sets effectively manages load imbalance.

1.5 Validation of Cost-Driven Replication Ratio

To verify the cost-based replication ratio selection of SPID-Join, the join latency of SPID-Join is predicted by varying the Zipf factor from 0.0 to 2.0 and the accuracy of the cost model is evaluated. As a result, the join latency of SPID-Join using the optimal replication ratio is found to be only 0.85% higher than that of Oracle. The cost model correctly selects the best-performing replication ratio for three out of five benchmarks, and captures the trade-off between the benefits of join key replication and the overheads of the R tuple replication. However, there is a tendency for the measured latencies to be slightly higher than the predicted latencies with low replication ratios, and this tendency is due to the slight errors caused by the cost model's communication modeling.

1.6 Fast Join Executions with TPC-H Dataset

To evaluate the performance of SPID-Join, the join execution latencies between multiple tables are compared using the TPC-H dataset. Join simulations are performed using the Lineitem, Part, Supplier, and Orders tables with a scale factor of 10 on the TPC-H dataset. SPID-Join performs up to 4.88 times faster than PID-Join as the Zipf factor increases, with a mean absolute percentage error of only 0.72%, which highlights the effectiveness of cost-based replication ratio selection. However, due to the size of the Orders table, SPID-Join's performance on skewed data is somewhat limited.

1.7 System Cost

To compare the system costs of SPID-Join and PID-Join, the recommended retail price of the PID device 100 is calculated. As the Zipf factor increases, the performance-to-cost ratio of SPID-Join remains relatively constant, while the performance-to-cost ratio of PID-Join decreases significantly. With the Zipf factor of 2.0, SPID-Join achieves 5,938 tuples/sec/$, which is 8.37× higher than that of PID-Join. As a result, it shows that SPID-Join effectively resolves load imbalance between IDPs 111 and better utilizes the PID device 100.

1.8 Impact of the Zipf Factor Mismatch

To study the impact of inaccurately estimated Zipf factors on the cost-driven replication ratio selection, -20% to

# EP 4 738 107 A1

+20% errors are introduced to the Zipf factors. Despite these errors, the cost model selects the optimal replication ratio in 13 out of 20 cases. The predicted latencies follow a consistent pattern that the latency increases at low replication ratios, decreases in response to increasing replication ratios, and increases again at higher ratios. Even when non-optimal ratios are chosen, the execution latencies do not significantly differ from the optimal latencies, with a mean absolute percentage error of only about 0.51%.

1.9 Comparison with CPU Join Algorithms

When the latencies between SPID-Join, PID-Join, and CPU join algorithms are compared, SPID-Join outperforms M-PASS across all Zipf factors. SPID-Join achieves lower latencies than PRO and PRHO up to a Zipf factor of 1.0, while showing much higher latencies with high skews than PRO and PRHO. This emphasizes the importance of skew mitigation in exploiting PID-enabled DIMMs 110, and SPID-Join shows higher latencies with high Zipf factors (1.5, 2.0) than PRO and PRHO.

The above description is merely exemplary description of the technical scope of the present disclosure, and it will be understood by those skilled in the art that various changes and modifications can be made without departing from the spirit and scope of the present disclosure as set forth in the following claims.

[National Research and Development Project Supporting The Present Invention]

[Project Serial No] 2710006677
[Task Project No] RS-2020-II201361
[Task management (professional) institution name] Ministry of Science and ICT
[Task management (professional) institution name] Information and Communication Planning and Evaluation Institute
[Research Project name] Information and Communication Broadcasting Innovation Talent Training (R&D)
[Research Task Name] Artificial Intelligence Graduate School Support (Yonsei University)
[Name of task performing organization] Yonsei University Industry-Academic Cooperation Foundation
[Research Period] 2024.01.01 ~ 2024.12.31
[National Research and Development Project Supporting The Present Invention]
[Project Serial No] 2710007386
[Task Project No] RS-2024-00395134
[Task management (professional) institution name] Ministry of Science and ICT
[Task management (professional) institution name] Information and Communication Planning and Evaluation Institute
[Research Project name] AI Semiconductor-based Data Center Advanced Leading Technology Development
[Research Task Name] DPU-Centered Data Center Architecture for Next-Generation AI Semiconductors
[Name of task performing organization] Yonsei University Industry-Academic Cooperation Foundation
[Research Period] 2024.04.01 ~ 2024.12.31

[Detailed Description of Main Elements]

| 100: | skew resistance PID device | | |
|------|----------------------------|------|----------|
| 110: | DIMM | 111: | IDP |
| 112: | rank | 113: | bank |
| 120: | memory controller | 130: | host CPU |

## Claims

1. A skew resistance Processing in DIMM (PID) device, comprising:

Dual In-line Memory Modules (DIMMs) composed of multiple ranks respectively having multiple banks, and In-DIMM Processors (IDPs) that process internal memory operations;

11

a memory controller; and
a host CPU connected to the memory modules through the memory controller and configured to enhance parallel processing performance of the IDPs by replicating a join key in units of bank sets and rank sets.

2. The skew resistance PID device of claim 1, wherein the host CPU analyzes a configuration of R and S tables and determines a cost model for determining a replication ratio based on a configuration of the PID device.

3. The skew resistance PID device of claim 2, wherein the host CPU determines a bank set count and a rank set count by calculating an optimal join key replication ratio through the cost model.

4. The skew resistance PID device of claim 2, wherein the host CPU performs a Host-to-DIMM Scatter operation to distribute the R and S tables to the DIMM.

5. The skew resistance PID device of claim 1, wherein the IDPs perform a Bank and Rank Set-aware Partitioning operation to replicate the R table to bank sets and rank sets and distribute the S table to the bank sets and the rank sets based on the replication of the R table.

6. The skew resistance PID device of claim 5, wherein the host CPU performs an All-to-All Inter-IDP Shuffle operation to transmit data of the R and S tables to each of the IDPs so that each of the IDPs exchanges and processes data of the R and S tables.

7. The skew resistance PID device of claim 6, wherein each of the IDPs performs a Single-IDP Join operation to generate a join result by performing a join operation based on data of the R and S tables.

8. The skew resistance PID device of claim 7, wherein each of the IDPs performs hash join or sort-merge join as the join operation.

9. The skew resistance PID device of claim 7, wherein the IDPs transmit corresponding join results to the host CPU so that the host CPU collects the join results to generate a final result.

10. A skew resistance Processing in DIMM (PID) processing method, performed by a skew resistance PID device which comprises: Dual In-line Memory Modules (DIMMs) composed of multiple ranks respectively including multiple banks, and In-DIMM Processors (IDPs) that process internal memory operations; a memory controller; and a host CPU connected to the memory modules through the memory controller and configured to enhance parallel processing performance of the IDPs by replicating a join key in units of bank sets and rank sets, the method comprising:

    determining a replication ratio based on a configuration of the PID device; and
    enhancing parallel processing performance of the IDPs by replicating a join key in units of bank sets and rank sets based on the determined replication ratio.

## Fig.1

| PID Join Algorithm | Skew Resistance | Input Tuple Distribution ($|R| \leq |S|$) | | $|R| : |S|$ Ratios |
| --- | --- | --- | --- | --- |
| | | R | S | |
| UPMEM-Join [60] | Low | IDP-wise Global Partitioning | IDP-wise Global Partitioning | $1{:}1^{\dagger}$ |
| PID-Join [43] | Low | IDP-wise Global Partitioning | IDP-wise Global Partitioning | Any |
| SPID-Join (This work) | High | Bank- & Rank-wise Replication+Partitioning | Replication-aware Global Partitioning | Any |

## Fig.2

<u>100</u>

## Fig.3

100

## Fig.4

100

**Fig.5**

```
                    ┌─────────┐
                    │  START  │
                    └─────────┘
                         │
                         ▼
┌──────────────────────────────────────────────────────┐  ⌐S510
│          DETERMINING REPLICATION RATIO                 │
└──────────────────────────────────────────────────────┘
                         │
                         ▼
┌──────────────────────────────────────────────────────┐  ⌐S530
│             REPLICATING JOIN KEY                       │
└──────────────────────────────────────────────────────┘
                         │
                         ▼
                    ┌─────────┐
                    │   END   │
                    └─────────┘
```

**Fig.6**

(a) Configuration of eight bank sets within a 64-bank rank

(b) Replicating join keys to the eight bank sets

Fig.7

(a) Configuration of the two rank sets within 16 ranks

(b) Replicating join keys to the rank sets

Fig.8

Figure 12: Illustration of SPID-Join's bank and rank set-aware partitioning on an IDP and its input tuples

## Fig.9

### Table 2: Notations for SPID-Join's cost model

| Variable | Description |
|---|---|
| $TP_{SP}$ | Throughput of bank and rank set-aware partitioning of an IDP [tuples/sec] |
| $TP_{LP}$ | Throughput of local partitioning of an IDP [tuples/sec] |
| $TP_{Build}$ | Throughput of hash table build of an IDP [tuples/sec] |
| $TP_{Probe}$ | Throughput of hash table probe of an IDP [tuples/sec] |
| $BW_{HtoD}$ | Bandwidth of host-to-DIMM scatter [tuples/sec] |
| $BW_{Shuffle}$ | Bandwidth of inter-IDP shuffle [tuples/sec] |
| $BW_{DtoH}$ | Bandwidth of DIMM-to-host gather [tuples/sec] |

Fig.10

(a) $|R| = 0.5\,M$, $|R| : |S| = 1:1$

(b) $|R| = 0.5\,M$, $|R| : |S| = 1:2$

(c) $|R| = 0.5\,M$, $|R| : |S| = 1:4$

(d) $|R| = 0.5\,M$, $|R| : |S| = 1:8$

(e) $|R| = 2\,M$, $|R| : |S| = 1:1$

(f) $|R| = 2\,M$, $|R| : |S| = 1:2$

(g) $|R| = 2\,M$, $|R| : |S| = 1:4$

(h) $|R| = 2\,M$, $|R| : |S| = 1:8$

(i) $|R| = 8\,M$, $|R| : |S| = 1:1$

(j) $|R| = 8\,M$, $|R| : |S| = 1:2$

(k) $|R| = 8\,M$, $|R| : |S| = 1:4$

(l) $|R| = 8\,M$, $|R| : |S| = 1:8$

(m) $|R| = 32\,M$, $|R| : |S| = 1:1$

(n) $|R| = 32\,M$, $|R| : |S| = 1:2$

(o) $|R| = 32\,M$, $|R| : |S| = 1:4$

(p) $|R| = 32\,M$, $|R| : |S| = 1:8$

## EUROPEAN SEARCH REPORT

**Application Number**

EP 25 15 6499

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HONGBO KANG ET AL: "PIM-tree: A Skew-resistant Index for Processing-in-Memory", ARXIV.ORG, CORNELL UNIVERSITY LIBRARY, 201 OLIN LIBRARY CORNELL UNIVERSITY ITHACA, NY 14853, 18 November 2022 (2022-11-18), XP091373142, * abstract; figures 1-18 * * page 1, left-hand column - page 17, left-hand column * | 1-10 | INV. G06F9/30 G06F15/78 |
| A | Sakr Sherif ET AL: "Large Scale and Big Data: Processing and Management" In: "Large Scale and Big Data: Processing and Management", 25 June 2014 (2014-06-25), CRC Press, XP093293759, ISBN: 978-1-4665-8150-0 pages 46-46, Retrieved from the Internet: URL:https://www.routledge.com/Large-Scale-and-Big-Data-Processing-and-Management/Sakr-Gaber/p/book/9781466581500> * page 46 * | 1-10 | |
| A | Wells April J.: "Grid Database Design" In: "Grid Database Design", 26 May 2005 (2005-05-26), CRC Press, XP093293916, ISBN: 978-0-203-32356-4 pages 237-237, Retrieved from the Internet: URL:https://www.routledge.com/Grid-Database-Design/Wells/p/book/9780429095436> * page 237 * | 1-10 | |

**TECHNICAL FIELDS SEARCHED (IPC)**

G06F

-/--

The present search report has been drawn up for all claims

| Place of search | Date of completion of the search | Examiner |
|---|---|---|
| The Hague | 22 July 2025 | Freitas, Arthur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

## EUROPEAN SEARCH REPORT

**Application Number**

EP 25 15 6499

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Join (SQL) - Wikipedia", , 30 July 2024 (2024-07-30), pages 1-14, XP093293741, Retrieved from the Internet: URL:https://en.wikipedia.org/w/index.php?title=Join_(SQL)&oldid=1237592281 [retrieved on 2025-07-08] * the whole document * | 1-10 | |
| A | FOTO AFRATI ET AL: "SharesSkew: An Algorithm to Handle Skew for Joins in MapReduce", ARXIV.ORG, CORNELL UNIVERSITY LIBRARY, 201 OLIN LIBRARY CORNELL UNIVERSITY ITHACA, NY 14853, 12 December 2015 (2015-12-12), XP081576685, DOI: 10.1016/J.IS.2018.06.005 * the whole document * | 1-10 | |
| A | LIM CHAEMIN ET AL: "Design and Analysis of a Processing-in-DIMM Join Algorithm: A Case Study with UPMEM DIMMs", PROCEEDINGS OF THE ACM ON MANAGEMENT OF DATA, ACMPUB27, NEW YORK, NY, USA, vol. 1, no. 2, 20 June 2023 (2023-06-20), pages 1-27, XP059549699, DOI: 10.1145/3589258 * the whole document * | 1-10 | **TECHNICAL FIELDS SEARCHED (IPC)** |
| A | US 2024/354278 A1 (KIM YOUNGSOK [KR] ET AL) 24 October 2024 (2024-10-24) * paragraphs [0027] - [0045], [0065] - [0141]; figures 1-17B * | 1-10 | |

-/--

The present search report has been drawn up for all claims

| Place of search | Date of completion of the search | Examiner |
|---|---|---|
| The Hague | 22 July 2025 | Freitas, Arthur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

page 2 of 3

| | Europäisches Patentamt European Patent Office Office européen des brevets | **EUROPEAN SEARCH REPORT** | Application Number EP 25 15 6499 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | LEE SUHYUN ET AL: "SPID-Join: A Skew-resistant Processing-in-DIMM Join Algorithm Exploiting the Bank- and Rank-level Parallelisms of DIMMs", ARXIV.ORG, [Online] vol. 2, no. 6, 18 December 2024 (2024-12-18), pages 1-27, XP093293765, ISSN: 2836-6573 Retrieved from the Internet: URL:https://dl.acm.org/doi/pdf/10.1145/3698827> [retrieved on 2025-07-08] * the whole document * * Inventor's paper published after priority date. * ----- | 1-10 | |

TECHNICAL FIELDS SEARCHED (IPC)

The present search report has been drawn up for all claims

| Place of search | Date of completion of the search | Examiner |
|---|---|---|
| The Hague | 22 July 2025 | Freitas, Arthur |

EPO FORM 1503 03.82 (P04C01)

## ANNEX TO THE EUROPEAN SEARCH REPORT
## ON EUROPEAN PATENT APPLICATION NO.

EP 25 15 6499

22-07-2025

| Patent document cited in search report | Publication date | Patent family member(s) | | Publication date |
|---|---|---|---|---|
| US 2024354278 A1 | 24-10-2024 | EP | 4451116 A1 | 23-10-2024 |
| | | JP | 2024154355 A | 30-10-2024 |
| | | KR | 20240154281 A | 25-10-2024 |
| | | US | 2024354278 A1 | 24-10-2024 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240150358

- KR 20220062399